# NEUE EUROPÄISCHE PATENTSCHRIFT

(11) **EP 0 995 581 B2**
(45) Veröffentlichungstag und Bekanntmachung des Hinweises auf die Entscheidung über den Einspruch: **17.09.2008**
(45) Hinweis auf die Patenterteilung: 22.12.2004
(21) Anmeldenummer: 99117190.1
(22) Anmeldetag: 01.09.1999
(51) Int. Cl.: B29C 51/44, B29C 51/26

(54) **Thermoformmaschine**
Thermoforming machine
Machine de thermoformage

(30) Priorität: 22.10.1998 DE 19848628
(43) Veröffentlichungstag der Anmeldung: 26.04.2000
(73) Patentinhaber: Gabler Maschinenbau GmbH, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- DE-A- 3 346 628

## Beschreibung

Die Erfindung betrifft eine Thermoformmaschine mit einer speicherprogrammierbaren Steuerung zum Formen und Stanzen von tiefgezogenen, beliebigen becher- oder deckelartigen Artikeln aus thermoplastischem, über einen intermittierenden Folientransport zugeführtem Kunststoff oder dergleichen, umfassend ein mit mehreren über- bzw. nebeneinanderliegenden Artikelreihen ausgebildetes Mehrfach-Form- und Stanzwerkzeug, bestehend aus einem Oberwerkzeug und einem zum Abstapeln der Fertigartikel ausschwenkbaren Unterwerkzeug, dem in einer nachgeschalteten automatischen Stapel- und Zählvorrichtung eine die nach dem Schwenken des Maschinentisches bzw. des Unterwerkzeuges aus der Maschine ausgestoßenen Artikel in komplementären Ausformungen zu Artikelstangen zusammenführende, verfahrbare Fangplatte zugeordnet ist, aus der beim Erreichen der vorgewählten Stückzahl die Artikelstangen in einer maschinenentfernten Übergabeposition auf eine Artikelstangen-Aufnahmeplatte bzw. einen Stapelkorb übergeleitet und von dort entnommen werden:

Bei einer aus der DE 33 46 628 C2 bekannten Thermoformmaschine dieser Art werden zwischen den relativ aufeinanderzu- bzw. voneinanderwegbewegten Werkzeugen Kunststoffartikel wie Margarineschalen, Trinkbecher, Behälterdeckel, Trays usw. aus thermoplastischen Kunststoff-Folien und Verbundfolien hergestellt. Hierbei werden in der geschlossenen Stellung von Ober- und Unterwerkzeug die Artikel geformt, dann gestanzt und bei geöffneter Stellung aus dem Werkzeug heraus in eine nachgeschaltete Stapel- und Zähleinrichtung transportiert. Das Oberteil bzw. -werkzeug der Thermoformmaschine ist an einer starren Querbrücke montiert, während das Unterteil bzw. -werkzeug auf einem höhenbeweglichen und schwenkbaren Formtisch befestigt ist. Zur Schwenkbarkeit des Formtisches besitzt dieser Lagerzapfen, deren Lager in je einen vertikal geführten Führungsstück angeordnet sind. Zum Antrieb dienen Kniehebel, die mit Kurvenrollen den auf einer Hauptwelle befestigten Kurvenscheiben anliegen.

Damit die Artikel beim Abstapeln nicht gegen Störkanten geraten, wie beispielsweise im Bereich des Folientransportes, ist für das ausschwenkbare Unterwerkzeug ein großer Schwenkwinkel von etwa 45 bis 90°, typischerweise von 80°, erforderlich. Die in der ausgeschwenkten Werkzeug-Endlage aus der Maschine ausgestoßenen Fertigartikel werden von einer dem gekippten Werkzeug entgegenfahrenden bzw. dem Werkzeug zugestellten Fangplatte aufgenommen, um ein reproduzierbares Einstapeln zu ermöglichen. Das Verfahren der Fangplatte abwechselnd auf die Maschine zu und von dieser weg ist erforderlich, um aus den Störradius bzw. -bereich im Schwenkweg des kippenden Werkzeuges zu gelangen. Dieser Zustell- bzw. Verfahrweg beträgt bei den bekannten Thermoformmaschinen ca. 80 bis 150 mm. Wenn dieses Verfahren als Folgesteuerung von Maschinen-Kipptisch und Fangplatte ausgelegt ist, ergeben sich erhöhte Totzeiten für den Maschinenzyklus. Ein zur Verringerung der Totzeiten alternatives schnelles Zurückfahren mit hoher Beschleunigung und Verzögerung und damit entsprechend hoher Verfahrdynamik setzt aufwendige Haltekonstuktionen für die in der beschleunigten bzw. verzögerten Fangplatte den Massenkräften ausgesetzten Artikel voraus. Dabei tritt allerdings durch die Haltekonstruktionen ein nachteiliger Verformungseinfluß auf die Fertigartikel beim Einstapeln, Auskämmen und Abschieben der Fertigartikel auf. Um die Massenkräfte möglichst gering zu halten, wird der Verfahrweg bei den bekannten Thermoformmaschinen daher so klein wie möglich gehalten, was aber eine jeweils produktspezifische Einstellung der Betriebsweise der Maschine erfordert.

Eine aus der DE-Zeitschrift "Kunststoffe 88, (1998) 2, Seiten 158 bis 161 bekannte Thermoformmaschine der eingangs genannten Art sieht vor, daß die dort geformten Becher von einer Saugerplatte übernommen und in Zentrierpaletten gestapelt werden. Zuvor ist das Unterwerkzeug nach dem Formvorgang um 80° zur Foliendurchlaufrichtung, d.h. in die ideale Übergabeposition der Becher in die Stapeleinrichtung gekippt worden. Das Ansaugen der Artikel macht allerdings den Auswerfer komplizierter und die Einheit bedingt durch die benötigte Vakuumanlage aufwendiger.

Der Erfindung liegt die Aufgabe zugrunde, eine gattungsgemäße Thermoformmaschine so zu gestalten, daß ohne erhöhte Totzeiten im Maschinenzyklus auf einfache Weise eine prozeßsichere, artikelschonende Handhabung der Fertigartikel beim Ausstoßen in die Fangplatte möglich ist.

Bei einer angeblich vorbenutzten, gattungsgemäßen Thermoformmaschine mit der Typenbezeichnung RDM70K und 75K wird die Fangplatte über den Störradius hinaus mit einem Kurbelbetrieb bewegt, womit es zu einem grundsätzlich sinusförmigen Verlauf der Geschwindigkeitskurven kommt.

Diese Aufgabe wird erfindungsgemäß dadurch gelöst, daß der Verfahrweg der Fangplatte über den Störradius des Schwenkweges des Unterwerkzeuges hinaus verlängert ist, die dem Störradius entsprechende erste Wegstrecke beim Wegfahren der Fangplatte mit hoher, konstanter Beschleunigung bzw. beim Zustellen der Fangplatte mit hoher, konstanter Verzögerung zurückgelegt wird und die zweite, verlängerte Wegstrecke mit einer kleinen, konstanten Verzögerung bzw. Beschleunigung durchfahren wird. Die Erfindung weicht damit gezielt ab von den bisherigen kurzen Verfahrwegen und schlägt demgegenüber einen sehr viel längeren (ca. 470 mm) Verfahrweg vor, was es ermöglicht, die Fangplatte nach dem Verlassen des Störbereichs mit einer kleinen Verzögerung harmonisch zu bremsen bzw. - beim Zustellen - zu beschleunigen. Die ansonsten sowohl für das Beschleunigen als auch das Verzögern benutzte kurze Wegstrecke des Störbereichs wird erfindungsgemäß nur mit einer hohen Beschleunigung bzw. nur mit hoher Verzögerung zurückgelegt, d.h. es kommt in diesem dem Störbereich entsprechenden Verfahrweg zu keinem abrupten Bewegungsübergang. Die damit erreichte gleiche Verfahrdynamik ergibt einen solchen Bewegungsablauf, daß kein maßgebliches Auseinanderziehen der ineinandergestapelten Fertigartikel auftritt. Denn sobald der Störbereich verlassen wird, wirken nur so kleine Massenkräfte, die die Reibkräfte zwischen den Fertigartikeln und der Stapelunterlage nicht überwinden können.

Der Erfindung liegt weiterhin die Erkenntnis zugrunde, daß ein insgesamt so deutlich längerer Verfahrweg dennoch nicht zu einer entsprechend höheren Maschinen-Zykluszeit führt, denn das Durchlaufen der verlängerten Wegstrecke, sei es beim Wegfahren oder Zustellen der Fangplatte, findet dann statt, wenn in der Thermoformmaschine bei geschlossenem Werkzeug die Artikel hergestellt und ausgestanzt werden bzw. der Werkzeugtisch abgesenkt und geschwenkt wird.

Nach einer bevorzugten Ausführung der Erfindung sind das Verfahren der Formplatte und das Schwenken des Unterwerkzeuges synchronisiert. Die Fangplatte nimmt damit in jeder Betriebsphase eine Position ein, in der sie außerhalb des Störbereichs für den Schwenkweg des Unterwerkzeuges liegt, ohne damit die Zykluszeit zu erhöhen. Das Wegfahren mit hoher Beschleunigung bzw. Zustellen mit hoher Verzögerung setzt folglich zeitgleich mit dem Aus- bzw. Zurückschwenken des Unterwerkzeugs ein. Die speicherprogrammierbare Steuerung ermöglicht hierbei einen prozeßgesteuerten Stapelvorgang mit Echtzeitregelung, bei dem die unterschiedlichen Istgeschwindigkeiten für z.B. hohe Becher oder Deckel mit ihren Parametern vorab eingegeben werden können, so daß es keiner produktspezifischen Einstellung mehr bedarf und bei einem immer gleichen Verfahrweg eine unverändert gute Verfahrdynamik mit harmonischer Abbrems- bzw. Beschleunigungscharakteristik eingehalten werden kann. Damit läßt sich ohne Maschinen-Totzeiten trotzdem eine sichere Handhabung der Fertigartikel erreichen, für die die Prozeßsteuerung die Dämpfung bzw. Beschleunigung in Abhängigkeit von dem jeweiligen Artikel vorgibt. Da die Artikelübergabe somit ohne Haltemittel möglich ist, entfällt nicht nur der damit verbundene Aufwand, sondern die Artikel weisen auch keine Druckstellen oder sonstige mechanischen Beschädigungen auf.

Weitere Merkmale und Vorteile der Erfindung ergeben sich aus den Ansprüchen und der nachfolgenden Beschreibung, in der ein Ausführungsbeispiel des Gegenstandes der Erfindung näher erläutert ist. Es zeigen:
- Fig. 1: in der Seitenansicht eine Thermoformmaschine mit nachgeschalteter Stapel- und Zählvorrichtung für in diesem Ausführungsbeispiel abzustapelnde Becher, schematisch dargestellt; und
- Fig. 2: den Bewegungsablauf beim Stand der Technik mit einem kurzen Verfahrweg (a) und bei einem verlängertem Verfahrweg (b) der Fangplatte der Thermoformmaschine darstellende Diagramme.

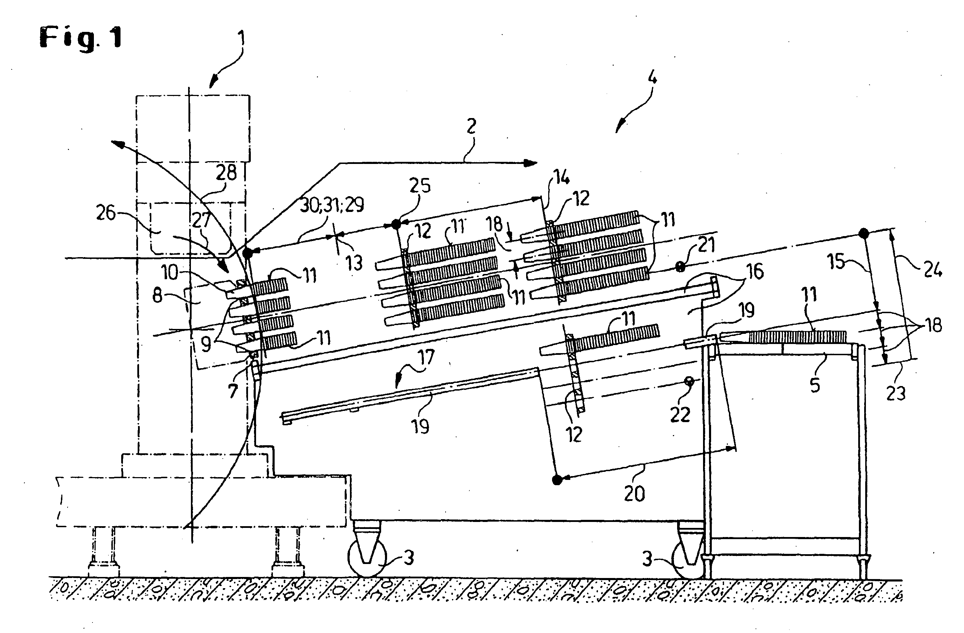

Einer Thermoformmaschine 1 wird gemäß Fig. 1 von einer Seite her ein Kunststoff-Folienband 2 einlaufseitig zugeführt und auslaufseitig gemäß Pfeil auf einer nicht dargestellten Wickelrolle wieder aufgewickelt. Der Thermoformmaschine 1 ist eine auf Rädern 3 verfahrbare, automatische Stapel- und Zählvorrichtung 4 sowie dieser ein Transportband 5 nachgeschaltet. Die Stapel- und Zählvorrichtung 4 umfaßt eine verfahrbare Fangplatte 7, die entsprechend der Anzahl der in dem Unterwerkzeug 8 der Thermoformmaschine 1 in über- und nebeneinanderliegenden Reihen vorgesehenen Formnester eine entsprechende Zahl von Ausformungen bzw. -nehmungen 9 aufweist, in die die Fertigartikel 10 von - nicht dargestellten - Ausstoßern der Thermoformmaschine 1 eingebracht und dort zu Artikelstangen 11 mit einer durch die speicherprogrammierbare Steuerung (nicht gezeigt) der Thermoformmaschine 1 vorgegebenen Anzahl von Fertigartikeln 10 ineinandergestapelt werden. Die Stapelund Zählvorrichtung 4 weist weiterhin einen Stapelkorb 12 auf, der die Artikelstangen 11 von der Fangplatte 7 übemimmt und aus dem die Artikelstangen 11 auf das Transportband 5 abgegeben werden, beispielsweise um einem weiteren Barbeitungsvorgang wie einer Bedruckmaschine oder einem Bördelaggregat zugeführt zu werden.

Der Stapelkorb 12 ist zur Abnahme der Artikelstangen 11 in Richtung auf die Fangplatte 7 bis zu einer Übergabeposition 13 verfahrbar und nach der Abnahme der Artikelstangen 11 in eine von der Fangplatte 7 entfernte Entladestation 14 verfahrbar. Der Stapelkorb 12 kann aus dieser Position heraus taktweise abgesenkt werden, und zwar zunächst mit einem großen Senkhub 15 so weit, bis die untere Reihe der Artikelstangen 11 in Flucht mit einer in dem Traggestell 16 der Stapel- und Zählvorrichtung 4 angeordneten Abschiebereinheit 17 liegt, und danach jeweils mit einem dem Höhenmaß 18 der übereinanderliegenden Reihen von Artikelstangen 11 entsprechenden Hub. Die Abschiebereinheit 17, die für jede Artikelstange 11 einen Abschieberstab 19 besitzt und in Richtung des Doppelpfeiles 20 hin und her bwegbar ist, schiebt die in Teilhüben sukzessive abgesenkten Artikelstangen auf das Transportband 5 über. Nach jedem Abschiebevorgang wird das Transportband so weit verfahren, daß die Artikelstangen der nächstfolgenden Artikelreihe des Stapelkorbes 12 abgeschoben werden können. Das Absenken des Stapelkorbes 12 wird von zwei Endlagenschaltem 21 bzw. 22 überwacht. Sobald der letzte Abschiebevorgang beendet ist, wird der entleerte Stapelkorb 12 aus seiner untersten Endstellung 23 gemäß Pfeil 24 in die obere Endlage angehoben und anschließend in die Ausgangsposition 25 verfahren, aus der heraus er dann zur Abnahme von während der Zeit des Abschiebens der Artikelstangen in die Fangplatte 7 eingestapelten neuen Fertigartikel 10 in die Übergabeposition 13 verstellt wird.

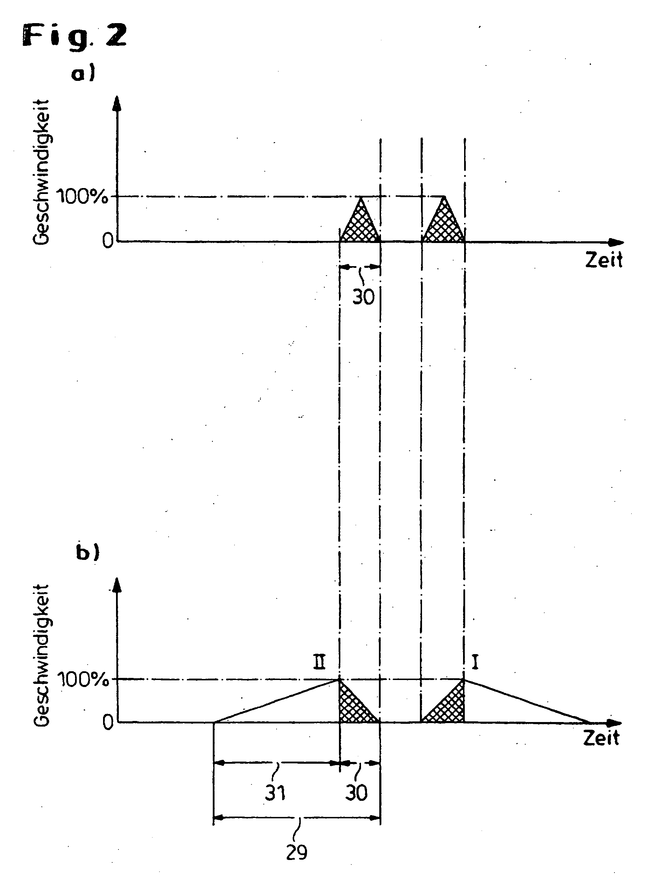

Die Fangplatte 7 nimmt nämlich ununterbrochen neue Fertigartikel (Becher) 10 auf, die aus dem auf seinem Weg zu der neben dem Unterwerkzeug 8 auch ein Oberwerkzeug 26 sowie eine nicht gezeigte Heizstation der Thermoformmaschine 1 durchlaufenden Folienband 2 hergestellt werden. Denn sobald ein der Anzahl der in dem Unterwerkzeug 4 vorgesehenen Formnester entsprechender Abschnitt des Folienbandes zwischen Ober- und Unterwerkzeug 26 bzw. 8 eingelaufen ist, werden bei geschlossenen Werkzeugen die Artikel ausgeformt und -gestanzt. Sobald die Artikel 10 fertiggestellt sind, wird das Unterwerkzeug 8 in Pfeilrichtung 27 in die in Fig. 1 unten gezeigte Auswurfstellung verschwenkt. Das Unterwerkzeug 8 bestreicht beim Kippen bzw. Ausschwenken einen schematisch als Störradius 28 in Fig. 1 eingezeichneten Bereich, der nämlich während der Schwenkbewegung des Unterwerkzeuges 8 von der Fangplatte 7 nicht gestört werden darf, d.h. frei bleiben muß. Die Fangplatte 7 wird daher synchron mit dem Schwenken des Unterwerkzeuges 8 von diesem weggefahren bzw. dem gekippten Werkzeug zugestellt. Dies wird mit einer stets gleichen, kein Auseinanderziehen der in die Fangplatte schon ineinandergestapelten Fertigartikel 10 bewirkenden Verfahrdynamik erreicht, indem der Verfahrweg 29 der Fangplatte 7 über den für den Störradius 28 des Schwenkweges des Unterwerkzeugs 8 eigentlich benötigten Verfahrweg 30 (vgl. die Fig. 2a und b) hinaus verlängert ist und noch durch eine zweite, zusätzliche Wegstrecke 31 (vgl. Fig 2b) ergänzt wird.

Sobald die hergestellten Fertigartikel 10 in die dem gekippten Unterwerkzeug 8 zugestellte Fangplatte 7 eingeschoben worden sind, verfährt diese gemäß der Verfahrdynamik I des Diagramms nach Fig. 2b - mit der dort über die Zeit gezeigten Geschwindigkeit - entsprechend dem mit gekreuzten Linien gekennzeichneten Dreieck der Beschleunigung aus dem Störbereich des schwenkenden Unterwerkzeuges 8. Ist der Störbereich verlassen, so wird die Fangplatte 7 gemäß der Verfahrdynamik I über die verlängerte Wegstrecke 31 mit einer kleinen Verzögerung harmonisch gebremst, so daß nur geringe Massenkräfte auftreten, die aber die Reibkräfte zwischen den ineinandergestapelten Fertigartikeln 10 der Artikelstangen 11 nicht überwinden und die Artikelstangen damit nicht auseinanderziehen können. Die harmonisch gebremste Verzögerung ergibt sich aus dem allmählich nach rechts abfallenden Dreieck der Verfahrdynamik I. Beim Zustellen der Fangplatte 7 ist dieser Ablauf gemäß der in Fig. 2b gezeigten Verfahrdynamik II genau umgekehrt, d.h. die Fangplatte 7 wird über die verlängerte Wegstrecke 31 zunächst nur gering beschleunigt und dann weggesteuert gebremst, wobei die Verzögerung entsprechend dem mit gekreuzten Linien gekennzeichneten steilen Dreieck der Verfahrdynamik II nur so groß ist, daß die Fangplatte 7 und der Maschinentisch bzw. das Unterwerkzeug 8 ohne Erhöhung der Maschinenzykluszeit synchron zueinander bewegt werden.

Demgegenüber läßt sich aus dem Geschwindigkeits-Zeit-Diagramm nach Fig. 2a, das die Verfahrdynamik bei herkömmlichen Thermoformmaschinen angibt, entnehmen, daß dort der gesamte Verfahrweg nur sehr kurz ist und der Wegstrecke 30 des Störradius 28 des Schwenkweges des Unterwerkzeugs 8 entspricht. Auf dieser kurzen Wegstrecke 30 wird die Fangplatte 7 sowohl mit einer großen Beschleunigung als auch einer ebenso großen Verzögerung bewegt, wodurch sich große, auf die ineinandergestapelten Artikel der Artikelstangen einwirkende Massenkräfte einstellen, die zusätzliche, für die noch nicht abgekühlten Artikel nachteilige Haltemittel erfordern, um ein Auseinanderziehen der Artikelstangen zu vermeiden.

## Patentansprüche

1. Thermoformmaschine mit einer speicherprogrammierbaren Steuerung zum Formen und Stanzen von tiefgezogenen, beliebigen becher- oder deckelartigen Artikeln aus thermoplastischem, über einen intermittierenden Folientransport zugeführtem Kunststoff oder dergleichen, umfassend ein mit mehreren über- bzw. nebeneinanderliegenden Artikelreihen ausgebildetes Mehrfach-Form- und Stanzwerkzeug, bestehend aus einem Oberwerkzeug und einem zum Abstapeln der Fertigartikeln ausschwenkbaren Unterwerkzeug, dem in einer nachgeschalteten automatischen Stapel- und Zählvorrichtung eine die nach dem Schwenken des Maschinentisches bzw. des Unterwerkzeugs aus der Maschine ausgestoßenen Artikel in komplementären Ausformungen zu Artikelstangen zusammenführende, verfahrbare Fangplatte zugeordnet ist, aus der beim Erreichen der vorgewählten Stückzahl die Artikelstangen in einer maschinenentfemten Übergabeposition auf eine Artikelstangen-Aufnahmeplatte bzw. einen Stapelkorb übergeleitet und von dort entnommen werden,
**dadurch gekennzeichnet, dass**
der Verfahrweg (29) der Fangplatte (7) über den Störradius (28) des Schwenkweges des Unterwerkzeuges (8) hinaus verlängert ist, die dem Störradius (28) entsprechende erste Wegstrecke (30) beim Wegfahren der Fangplatte (7) mit hoher, konstanter Beschleunigung bzw. beim Zustellen der Fangplatte (7) mit hoher, konstanter Verzögerung zurückgelegt wird und die zweite, verlängerte Wegstrecke (31) mit einer kleinen, konstanten Verzögerung bzw. Beschleunigung durchfahren wird.

2. Thermoformmaschine nach Anspruch 1,
**dadurch gekennzeichnet,**
**daß** das Verfahren der Fangplatte (7) und das Schwenken des Unterwerkzeuges (8) synchronisiert sind.

## Claims

1. A thermoforming machine with a programmable logic controller for forming and punching any kind of cup or cover-type deep-drawn articles of heat deformable plastic material or the like intermittently supplied via a film conveyor, including a multiple forming and punching tool configured with several rows of articles lying above or next to each other and consisting of an upper tool and of a lower tool which may be pivoted out of the machine for unstacking the finished articles, a travelable catching plate for assembling into rods of articles with complementary shapes the articles discharged after the machine table or the lower tool has been pivoted out of the machine being associated with said lower tool in an automatic stacking and counting device mounted downstream thereof, the rods of articles, as soon as the preselected number of article rods has been reached, being transferred, in a transfer position remote from the machine, onto a receiving plate for receiving the article rods or onto a stacking basket from where they are removed,
**characterized in**
**that** the path of travel (29) of the catching plate (7) is lengthened beyond the interfering radius (28) of the pivotal path of travel of the lower tool (8), the catching plate (7) travelling along the first path portion (30) corresponding to the interfering radius (28) with high constant acceleration when it is being moved away and with high constant deceleration when it is being supplied and along the second, lengthened path portion (31) with small constant deceleration or acceleration.

2. The thermoforming machine in accordance with claim 1,
**characterized in**
**that** the travel of the catching plate (7) and the pivoting of the lower tool (8) are synchronized.

## Revendications

1. Machine de thermoformage avec un système logique de commande pour former et estamper toutes sortes d'articles emboutis du type en forme de godet ou de couvercle à partir d'une matière thermoplastique ou similaire acheminée par intermittence par un convoyeur de feuilles, du type comprenant un outillage multiple de formage et d'estampage conformé avec plusieurs rangées d'articles superposés ou juxtaposés, ledit outillage étant constitué d'un outil supérieur et d'un outil inférieur, adapté pour être pivoté hors de la machine pour dépiler les articles finis, une plaque d'interception déplaçable servant à assembler en barres les articles de formes complémentaires éjectés après pivotement de la table de la machine ou de l'outil inférieur hors de la machine étant associée à l'outil inférieur dans un dispositif d'empilage et de comptage automatique monté en aval, les barres d'articles, lorsqu'elles ont atteint le nombre présélectionné, étant transférées, dans une position de transfert éloignée de la machine, sur une plaque de réception des barres d'articles ou dans un panier d'empilage avant d'en être retirées,
**caractérisée en ce que**
le trajet parcouru (29) par la plaque d'interception (7) en déplacement est prolongé au-delà du rayon gênant (28) de la trajectoire décrite par l'outil inférieur (8) lors de son pivotement, que la plaque d'interception (7) parcourt la première partie du trajet (30) correspondant au rayon gênant (28) en subissant une accélération importante, constante lorsqu'elle s'éloigne et une décélération importante, constante lorsqu'elle est rapprochée et la deuxième partie prolongée du trajet (31) en subissant respectivement une légère décélération ou accélération constante.

2. Machine de thermoformage selon la revendication 1,
**caractérisée en ce**
**que** le déplacement de la plaque d'interception (7) et le pivotement de l'outil inférieur (8) sont synchronisés.
